# EUROPEAN PATENT SPECIFICATION

(11) **EP 1 072 634 B1**
(45) Date of publication and mention of the grant of the patent: **16.03.2005**
(21) Application number: 99305999.7
(22) Date of filing: 28.07.1999
(51) Int. Cl.: C08J 5/24, C09J 7/00

(54) **Reactive resin sheet materials**
Reaktionsharzblattmaterialien
Matériaux en feuille de résine réactive

(43) Date of publication of application: 31.01.2001
(73) Proprietor: Hexcel Corporation, Dublin, California 94568 (US)
(72) Inventor: Steele, Mark, Huntingdon, Cambs PE18 6JW (GB)
(74) Representative: Doble, Richard George Vivian

(56) References cited:
- EP-A- 0 522 777
- EP-A- 0 906 927
- DATABASE WPI Week 9631 Derwent Publications Ltd., London, GB; AN 1996-303431 XP002126522 & JP 07 018099 A (TORAY IND INC), 20 January 1995 (1995-01-20)
- DATABASE WPI Week 9047 Derwent Publications Ltd., London, GB; AN 1990-351458 XP002126523 & JP 02 252779 A (NITTO DENKO CORP), 11 October 1990 (1990-10-11)

## Description

This invention relates to reactive resin sheet materials and especially to prepregs and to methods for their manufacture.

In many areas of industry there are employed sheet materials comprising at least in part a thermosetting resin-containing layer which resins are curable in a final assembly.

In particular there are many applications of prepregs i.e. porous sheets impregnated with curable resin.

These sheet materials can be assembled to adhere to the surface of a substrate which can be another layer of resinous sheet material for example another prepreg. The resulting assembly can then be cured into a final laminate. At least at the surface of the resin-containing layer, e.g. a prepreg, the resin has a certain degree of tack to facilitate adhesion of the surface of the layer (prepreg) to other surfaces. Adhesion of the layer (prepreg) prior to assembly can be avoided by covering the free surface with a release layer until ready for use. One problem which has been found with such resin-containing sheets, e.g. prepregs, is the achieving of a stability of the tacky surface so that there is no significant change until use in the final assembly. Another problem particularly in prepregs is ensuring that the matrix resin has a viscosity such that, on the one hand, it will fully impregnate the fibrous layer during manufacture but, on the other, the resin does not flow out of the fibrous reinforcement during storage and lay-up.

These problems although particularly characteristic of prepregs are also found in other types of reactive sheet materials including those in which there is no reinforcement although there may be a carrier or scrim layer. Such an assembly could be an adhesive film formulation which requires a reactive blend of resins but having a low tack on the surface prior to application of the sheet to the surface to which it is to be bonded.

The control of viscosity is usually achieved by formulating a resin with a content of higher molecular weight material. For example, in an epoxy prepreg, solid epoxy resins can be employed in the matrix composition which usefully increase the viscosity of the formulation without diminishing its ability to be cured and without degrading the resulting mechanical performance of the cured prepreg. Enhancement of the properties of the surface layer of the prepreg has also been achieved by adding thermoplastic polymers predominantly dissolved in the bulk matrix so as to enhance the adhesivity of the surface and to enhance resistance to cracking in the final cured laminate structure.

Increasing the viscosity, however, has the disadvantage that it tends to hinder the wetting of the fibrous layer contained in the core material. A failure to impregnate the fibrous layer satisfactorily with the matrix resin can reduce the resulting mechanical properties of the cured composite. To ensure the matrix resin can completely impregnate the fibrous layer, it is conventional to heat the matrix resin formulation to a temperature at which the resin viscosity falls to allow good impregnation. This is the so-called hot-melt method. Alternatively the resin formulation can be applied from a solution having a volatile solvent which is the process known as the lacquer method. In this method after the solution has been used to impregnate the fibres, the solvent is removed with the aid of heat.

These processes of impregnating are generally used with matrix resins which are cured by the action of heat at temperatures significantly in excess of 100°C for example 120° to 200°C. More recently there has been a move to use matrix resins which will cure at lower temperatures. This type of cure conserves energy and reduces cost. However, there have been difficulties in developing curing agents which have both stability and capacity to cure at temperatures less than 100°C. It is normally necessary that a prepreg will have a useful life of at least several days and more often several weeks when left at room temperature and this allows the use of the prepreg to assemble large and complex shapes over a period of days. However, prepregs using curing agents which cure at these low temperatures have very short storage lives at room temperature, often only one or two days.

Curing agents which cure at low temperatures say 60 to 70°C but have a good storage life of at least one week have been developed, see for example European Patent Application EP-A-906927. Using such a curing agent requires that the process of manufacturing the prepreg avoids the use of excessive heat. Any increase in temperature will significantly lower the room-temperature storage life of a prepreg of this type. For example, it is considered for every 10°C rise in storage temperature the storage life will be halved. Thus for a prepreg which has a potential storage life of one week at 23°C, a rise in temperature in excess of 30 to 40°C would destroy the storage life. This generally removes the possibility of using hot-melt or lacquer impregnation techniques.

The property tack mentioned above is the viscoelastic property of self-adhesiveness of the surface of a resin material. Desirable tack is a somewhat empirical property. Generally, a fully cured resin which has been cured to a hard state will have no tack. With less cure the tack of the surface will rise although a point will be reached at which there is so little cure of the monomer content that tack remains constant and equivalent to un-cured material. The property of tack in resins is described in Adhesion Science, John Comyn, (RSC Hardbacks First Edition 1997). Achieving a desired tack in a particular polymer composition is a combination of the monomeric components, the curing and other agents present and the conditions of cure and temperature of measurement. As indicated, it is somewhat empirical since two compositions having apparently very similar monomeric content can have very different tack properties.

There is therefore a need for an adhesive sheet material with stable tack properties at the surface, stable flow properties for the adhesive sheet and in which low temperature curing agents can be employed and, for prepreg structures with fibre reinforcements, achievement of complete impregnation without damaging the storage stability.

An acceptable stability of tack would be at least 5 days preferably greater than 21 days at 23°C. Similarly, an acceptable out-life would be at least 10 days preferably greater than 21 days at 23°C.

JP 07018099A discloses a sheet structure comprising a core sheet of a first curable resinous material and an outer layer of a second curable resinous material, said outer layer being capable of blending with the resin of the core sheet on elevating the temperature, the major part of the curing agent for the resinous materials being contained in the first resinous material and said curing agent curing at from 50°C to 230°C.

The present invention provides a sheet structure characterised in that said outer layer has a tack stability of at least 5 days at 23°C and has a lower tack than that of said first curable resinous material, and in that said curing agent has a latency of at least 5 days at 23°C.

The term core as used in this application signifies the central layer of a sandwich type structure comprising a fibrous layer impregnated with a curable matrix A and the term outer layer signifies a layer adjacent to the core material, contiguous and parallel with another sheet and comprising a matrix B. Where there are only two layers the term central simply signifies one of the two sheets but in most structures of this type there will in fact be at least three layers a central layer and outer layers on either surface of the centre layer. Matrix A refers to the formulated resin matrix used to impregnate the fibrous layer so producing the core material and matrix B refers to the formulated matrix used to produce the outer layer.

In the preferred embodiment of the invention the core is a curable matrix resin impregnating a fibrous layer. The impregnation of the fibrous layer should be such as to completely encompass the dry fibres in the center of the prepreg.

Specifically there is provided such a structure in which the core material is a fibrous material impregnated with a low viscosity resinous material containing the major part of the curing agent and the second resinous material has a stable tack.

In another aspect the invention provides a prepreg comprising a layer of fibrous material of areal weight of at least 150gsm impregnated with a thermosetting first curable resinous material having a viscosity of less than 20Pas at the cure temperature and containing a curing agent curing at from 50°C to 230°C and a latency at 23°C of at least 10 days and, on at least one surface of the said impregnated fibrous layer, a surface layer of a second curable resinous material which has a lower tack than the first curable resinous material, said tack remaining stable at 23°C for at least 5 days and said second curable resinous material becoming miscible with the first curable resinous material on heating.

Preferably said tack stability is at least 21 days at 23°C.

The prepregs of the invention can be used in multilayer constructions particularly in large industrial structures such as boat hulls when there can be up to 50 plies or even more. Thus the present invention can be applied to the manufacture of structures which currently use wet-lay-up techniques.

In another aspect the invention provides a method of manufacturing a prepreg wherein a layer of fibrous material is impregnated with a first curable resinous material containing a curing agent and having a viscosity of from 20Pas to 50Pas at the impregnation temperature and, during or after impregnation a film of a second curable resinous material is applied, wherein said second curable resinous material has a tack lower than that of the first curable resinous material and a tack stability of at least 5 days at 23°C and is, on heating, reducible in viscosity to combine with the first curable resinous material.

The outer or surface layer of the resin sheet material assembly which can be described as a tack-modifying layer can be applied to the adjacent core material by producing a core material comprising matrix resin A and subjecting that core material, for example, an impregnated fibrous material sheet, to a brief exposure to a medium which changes the properties of the surface so as to create a resin of different properties to the central core. In such a process the stratification of the content of curing agent may be achieved by providing a final coating of matrix resin B differing from the rest of the resin in its content of curing agent. Thus the central core material could be formed and the surface subjected to a curing means such as ultraviolet or other form of radiation sufficient to form a cured film on the surface without significantly modifying the central core. The outer film could, in the final stages of impregnation with a matrix resin, employ a resin which has a different (usually lesser) content of curing agent than the core resin.

A preferred technique, particularly for prepreg manufacture, is to impregnate a fibrous sheet with a very liquid core resin containing curing agent and then apply to the surface of the impregnated material a film containing a higher molecular weight curable resin free of curing agent but with stable tack properties. Such a film would normally be applied to both sides of the central core material. In such a structure the outer layer matrix B does not mix with the internal layer matrix A but provides a surface which prevents excessive flow of the internal layer. On applying a certain amount of heat, the viscosity of the resin in the outer layer drops permitting the resins of the two layers to become miscible and cure to take place by reason of the presence of the curing or active agent in the central layer.

Surprisingly it has been found that, if an outer layer containing curable resin and low tack but no curing agent is employed which resin can, on application of heat, be miscible with the resin impregnating the inner fibrous layer there is obtained a product which is capable of achieving an excellent degree of cure and the final product has good mechanical properties. Even using a low temperature curing agent, good storage life is secured.

The resin can be applied to the core material or fibre reinforced layer by a number of different techniques including impregnating the fibrous material sheet in a bath or other means of dipping the sheet into a mass of liquid. As the impregnated layer leaves the bath or other impregnation means there can be applied to either or both surfaces layers or films of other material to form outer layers of resin. Alternatively assemblages can be formed by feeding individual layers (sheets) to an amalgamating system, a layer of resin being applied to one or both sides of the fibrous layer and being pressed into the fibrous layer. For instance a low tack resin could be applied to a release paper to form a sheet of resin coated release paper. A second curable resin can then be applied to the resin side of the laminate structure, for example a low viscosity resin. A fibrous layer can then be applied, and a further layer of film and then amalgamation pressure applied to result in the final prepreg impregnated with the low viscosity resin and with curable resins on either face of the impregnated fibrous layer. These and many other techniques of forming layered structures, particularly fibre reinforced structures maybe used to produce this type of construction.

Fibrous reinforcements which may be used include glass, graphite, p-aramid, m-aramid, polyethylene, silica, natural fibres such as kenaf, hemp and cellulose, and mixtures of these, and these may be either unidirectional or may be present as woven fabrics or nonwoven mats. Support mediums such as carriers, which differ from reinforcements, aid processing and handlability but are not reinforcing may be used, these include glass scrims, polyester, polyolefin, natural fibres such as cotton.

In general the areal weight would preferably be at least 150 gsm and will usually be greater than 1200gsm but the upper limit will depend on the practical use to be made of the material.

Sheets or layers of prepreg can be assembled with each layer having the fibres uni-directional but the direction varying from layer to layer. Individual layers of fibre reinforcement are preferably impregnated separately.

The invention is particularly applicable to heavy weight fibrous reinforcements of areal weight greater than 150gsm particularly greater than 1200gsm for example glass fibre reinforcement.

Resins which can be employed include epoxy, acrylate, vinyl ester, cyanate ester, phenolic, urethane, and others well known in the art. Particularly preferred are epoxy, acrylate and vinyl ester chemistries.

The resin is preferably a thermosetting resin which can be advanced to a B cure stage. In the cure cycle of a thermosetting resin, an A stage refers to the early stage in the reaction of the resin in which the resin is still soluble and fusible. A B stage is an intermediate stage in the reaction in which the thermosetting resin melt is being heated and still dissolves in certain solvents. In production, the treated substrate can be procured to this stage to facilitate handling and processing prior to the final cure. A C stage is the final stage in curing the thermosetting resin in which the resin becomes infusible and insoluble in common solvents.

The resins used in the present invention will typically be at A stage (particularly for low viscosity resins) or partial B stage.

The low viscosity resin preferably has a viscosity of less than 50Pas at the desired impregnation temperature.

The resins which can be used in the invention can be most of those employed in the art including but not limited to epoxy phenol novolaks, epoxy cresol novolaks, multifunctional derivatives of bisphenol A, isocyanates, cyanate esters, bismalcimide and phenolics. These can be employed in combination. Especially useful are epoxy resins including the diglycidyl ethers of Bisphenol A and Bisphenol F, the tetraglycidyl derivative of 4,4'-diaminodiphenylmethane (TGDDM), the triglycidyl derivative of p-aminophenol, di-epoxy (cyclohexylmethyl cyclohexanecarboxylate) and mixtures of these. Other resins and conditions appropriate to their use will be well known to those in the art. These are particularly appropriate to the "central" core material containing matrix resin A which has low viscosity.

Resins which may be used in a surface layer include the compounds above but particularly those examples which may be obtained in essentially solid form, for instance solid bisphenol A. resins with Mw greater than 1000 but less than 15000, brominated and chlorinated bisphenol A epoxy resins, brominated and chlorinated tetraglycidyl diaminodiphenylmethane type resins, epoxy phenol novolaks, epoxy cresol novolaks, epoxy deritatives of bisphenol A novolaks, glycidyl ethers of phenol derivatives of dicylopentadiene, triglycidyl isocyanurate cyanate esters, bismaleimide, and phenolic, including combinations of the above and others well known in the art.

The resins of the two layers must be compatible so as to permit intermixing of the curable resins of the two layers and cure.

The miscibility or merging of the layers will occur when the viscosity of the formulation particularly the outer layer matrix tends to approach the viscosity of the inner matrix that is when the viscosity usually drops below 20Pas. However the degree of miscibility will depend on the individual resins and the invention may be operable even though there is relatively little miscibility providing there is sufficient interaction between the two matrices to provide a cured final body of resin.

Also the resins compositions must be of such a combination of resins and curing agent that there is sufficient separation of the softening stage for the resins to permit intermingling at the temperature at which cure commences. Normally the tack modifying or outer layer will soften at from 30°C to 40°C to allow the intermingling with the core matrix. Cure would then commence about 50°C very slowly while at 60°C the cure rate would be sufficient to achieve the desired level of cure. Typical cure times could arrange between 2 to 15 hours but preferably 5 to 10 hours.

One skilled in the art will have no difficulty in determining the appropriate compositions.

Curing agents which can be used in the active layer include any of the compounds known in the literature particularly those which give latent thermal cure. For epoxy resins this group includes imidazoles and their salts. Desirable agents will be those which maintain chemical and physical properties after aging a sample of the matrix resin to a predetermined temperature typically ambient (23°C). A specific and preferred example of these compounds are the imidazole derivatives described in EP 906927.

The curing agent utilised in the sheet structure of the invention cures at from 50°C to 230°C and has a latency of at least 5 days at 23°C.

The amount of curing agent in each resin layer will be governed by the properties of the resin and the desired curing conditions and are easily determinable by those skilled in the art from the extensive information available.

The major part or all of the curing agent will be in the impregnating resin. On raising the temperature slightly the two resins intermingle and the curing agent then acts on the single mass of resin.

Although the majority of the curing agent is present in only one of the layers of resin material, small amounts of the same or another agent could be present in the other layer providing the effect is not such as to materially affect stability of the product.

Other components may be present in each resin layer or at the surfaces for example thermoplastics which can be used to modify the flow and tack characteristics as well as improve the structural performance of the final product. In a fibre-reinforced layer there may be present in the layer or the resin, surface-active agents to facilitate wetting of fibres by resins.

In either or both layers there may be coupling agents, dyes, pigments, diluents, inorganic fillers, toughening agents, light stabilisers and flow control agents.

Prepregs according to the invention can be used in manufacture of cellular cored composites, laminated structures including bodies of vehicles and ships or boats or building construction units.

Embodiments of the invention will now be described by the following Examples:-

In these Examples the components are as follows:

| Material Trade Name | Chemical Name | Supplier |
|---|---|---|
| GY280 | Diglycidylether of Bisphenol A | Ciba Speciality Chemicals |
| Ly1556 | Diglycidylether of Bisphenol A | Ciba Speciality Chemicals |
| DER337 | Diglycidylether of Bisphenol A | Dow Chemicals |
| MY0500 | Triglycidyl-para-aminophenol | Ciba Speciality Chemicals |
| BYK S732 | Polyether modified methylalkyl polysiloxane copolymer | BYK |

### Example I

On a moving sheet of release paper Akrosil SBL/130G GID/D8B (Akrosil is a trade mark) there was applied a film of resin B at 60gsm areal weight which consists of GY280 (75g) and EP820 (25g) and having a tack lower than resin A and a viscosity of greater than 1000Pas below 40°C and less than 500Pas below 60°C. Over the surface of said film there was applied a coating of resin A at 600gsm areal weight consisting of LY1556 (65g), GY280 (25g) BYK S732 (0.3g) and 1-(imidazol-1-yl)-octadecan-2-ol (9.7g) (low viscosity resin) of viscosity less than 25 Pas at 30°C. Over this surface there was applied a sheet of Hexcel glass fabric MG/LBB/1200/J with an areal weight of 1200gsm. There were then applied a further film of the resin B at 60gsm areal weight and a final release sheet of release paper. The final layered structure was then subject to a pressure of 20psi at the impregnating nip rollers to impregnate the fibrous layer with the low viscosity matrix resin and amalgamate the structure.

The resulting prepreg had a storage life of 14 days during which there was no significant change in the properties of the resin components.

On application of the prepreg to a tool face or mould under a curing vacuum of -lbar and a temperature of between 50-60°C the tack modifying film matrix B, softens and combines with the low viscosity resin matrix A. On increasing the temperature to 60°C the combined resins cure, becoming infusible and insoluble in common solvents.

### Example II

On a moving sheet of release paper Akrosil SBL/130G GID/D8B (Akrosil is a trade mark) there was applied a film of resin B(1) at 60gsm areal weight which consists of GY280 (75g) and GT 6071 (25g) and having a tack lower than resin A(1) and a viscosity of greater than 1000Pas below 40°C and less than 500Pas below 60°C. Over the surface of said film there was applied a coating of resin A(1) 400gsm areal weight (low viscosity resin) consisting of LY1556 (75g) GY280 (10g), MY0500 (5g), BYK S732 (0.5g) and 2-methyl-imidazol-1-carboxylic acid octadecanamide (9.5g) of viscosity less than 25 Pas at 30°C. Over this surface there was applied a sheet of Hexcel glass fabric MG/BB/800/J with an areal weight of 800gsm. There were then applied a further film of the resin B(1) at 60gsm areal weight and a final release sheet of release paper. The final layered structure was then subject to a pressure of 20psi at the impregnating nip rollers to impregnate the fibrous layer with the low viscosity matrix resin and amalgamate the structure.

The resulting prepreg had a storage life of 14 days during which there was no significant change in the properties of the resin components.

On application of the prepreg to a tool face or mould under a curing vacuum of -lbar and a temperature of between 50-60°C the tack modifying film matrix B, softens and combines with the low viscosity resin matrix A. On increasing the temperature to 60°C the combined resins cure, becoming infusible and insoluble in common solvents.

### Example III

On a moving sheet of release paper Akrosil SBL/130G GID/D8B (Akrosil is a trade mark) there was applied a film of resin B(2) at 60gsm areal weight which consists of GY280 (80g) and EP820 (20g) and having a tack lower than resin A(2) and a viscosity of greater than 1000Pas below 40°C and less than 500Pas below 60°C. Over the surface of said film there was applied a coating of resin A(2) at 250gsm areal weight (low viscosity resin) consisting of LY1556 (75g), DER 337 (15g), and 1-(2-methyl-imadazol-1-yl) octadecan-2-ol (10g) of viscosity less than 25 Pas at 30°C. Over this surface there was applied a sheet of Hexcel glass fabric G1037 with an areal weight of 600gsm. There were then applied a further film of the resin B(2) at 60gsm areal weight and a final release sheet of release paper. The final layered structure was then subject to a pressure of 20psi at the impregnating nip rollers to impregnate the fibrous layer with the low viscosity matrix resin and amalgamate the structure.

The resulting prepreg had a storage life of 14 days during which there was no significant change in the properties of the resin components.

On application of the prepreg to a tool face or mould under a curing vacuum of -lbar and a temperature of between 50-60°C the tack modifying film matrix B, softens and combines with the low viscosity resin matrix A. On increasing the temperature to 60°C the combined resins cure, becoming infusible and insoluble in common solvents.

### Example IV

The procedure of Example I was repeated except that to the sheet of glass fibre there was applied a further coating of resin A and thereafter the second film of resin B both supported on a sheet of release paper adjacent resin B. The resulting structure had properties similar to the product of Example I.

## Claims

1. A sheet structure comprising a core sheet of a first curable resinous material and an outer layer of a second curable resinous material, said outer layer being capable of blending with the resin of the core sheet on elevating the temperature, the major part of the curing agent for the resinous materials being contained in the first resinous material and said curing agent curing at from 50°C to 230°C, **characterised in that** said outer layer has a tack stability of at least 5 days at 23°C and has a lower tack than that of said first curable resinous material, and **in that** said curing agent has a latency of at least 5 days at 23°C.

2. A sheet structure according to claim 1, wherein the second curable resinous material has a more stable tack than the first curable resinous material.

3. A sheet structure according to claim 1 or claim 2, in which the core sheet comprises a fibrous material impregnated with said first curable resinous material.

4. A sheet structure according to claim 3, in which the fibrous material has an areal weight of at least 150gsm.

5. A sheet structure according to claim 3, in which the fibrous material is glass, graphite, p-aramid, m-aramid, polyethylene, silica, kenaf, hemp or cellulose or a mixture thereof.

6. A sheet structure according to any one of claims 1 to 5, in which the total resin content of the structure is from 30% to 100% by weight, 100% occurring when no fibrous material is used in the sheet structure.

7. A sheet structure according to any one of claims 1 to 4 in which the second curable resinous material constitutes from 1 to 80% of the total resin content and the first curable resinous material constitutes from 20% to 99% by weight of the total resin content in the sheet structure.

8. A prepreg comprising a layer of fibrous material of areal weight of at least 150gsm impregnated with a thermosetting first curable resinous material having a viscosity of less than 20Pas at the cure temperature and containing a curing agent curing at from 50°C to 230°C and a latency at 23°C of at least 5 days and, on at least one surface of the said impregnated fibrous layer, a surface layer of a second curable resinous material which has a lower tack than the first curable resinous material, said tack remaining stable at 23°C for at least 5 days and said second curable resinous material becoming miscible with the first curable resinous material on heating.

9. A prepreg according to claim 8, wherein said tack stability is at least 21 days at 23°C.

10. A sheet structure according to claim 1 or a prepreg according to claim 7 wherein said first curable resinous material comprises a diglycidyl ether of Bispenol A and Bisphenol F, the tetraglycidyl derivative of 4, 4'-diaminodiphenylmethane (TGDDM), the triglycidyl derivative of p-aminophenol, di-epoxy (cyclohexylmethyl cyclohexanecarboxylate) or a mixture thereof.

11. A sheet structure according to claim 1 or claim 9 or a prepreg according to claim 7 or claim 9 wherein the second curable resinous material is selected from solid bisphenol A resins with Mw greater than 1000 but less than 15000, brominated and chlorinated bisphenol A epoxy resins, brominated and chlorinated tetraglycidyl diaminodiphenylmethane type resins, epoxy phenol novolaks, epoxy cresol novolaks, epoxy deritatives of bisphenol A novolaks, glycidyl ethers of phenol derivatives of dicylopentadiene, triglycidyl isocyanurate cyanate esters, bismaleimide, and phenolic, including combinations of the above.

12. A method of manufacturing a prepreg wherein a layer of fibrous material is impregnated with a first curableresinous material containing a curing agent and having a viscosity of from 20Pas to 50Pas at the impregnation temperature and, during or after impregnation a film of a second curable resinous material is applied, wherein said second curable resinous material has a tack lower than that of the first curable resinous material and a tack stability of at least 5 days at 23°C and is, on heating, reducible in viscosity to combine with the first curable resinous material.

## Patentansprüche

1. Flächige Struktur, aufweisend eine Schichtstoffmittellage aus einem ersten härtbaren Harzmaterial und eine äußere Lage aus einem zweiten härtbaren Harzmaterial, wobei die äußere Lage beim Erhöhen der Temperatur mit dem Harz der Schichtstoffmittellage compoundiert werden kann und der größere Teil des Härtungsmittels für die Harzmaterialien in dem ersten Harzmaterial enthalten ist und das Härtungsmittel bei 50° bis 230°C härtet,
**dadurch gekennzeichnet, dass** die äußere Lage eine Trockenklebrigkeitsstabilität von mindestens 5 Tagen bei 23°C hat und eine geringere Trockenklebrigkeit hat als die des ersten härtbaren Harzmaterials, und **dadurch gekennzeichnet, dass** das Härtungsmittel eine Latenzzeit von mindestens 5 Tagen bei 23°C hat.

2. Flächige Struktur nach Anspruch 1, bei welcher das zweite härtbare Harzmaterial eine stabilere Klebrigkeit als das erste härtbare Harzmaterial hat.

3. Flächige Struktur nach Anspruch 1 oder 2, bei welcher die Schichtstoffmittellage ein faseriges Material aufweist, das mit dem ersten härtbaren Harzmaterial imprägniert ist.

4. Flächige Struktur nach Anspruch 3, bei welcher das faserige Material ein Flächengewicht von mindestens 150 g/m² hat.

5. Flächige Struktur nach Anspruch 3, bei welcher das faserige Material Glas ist, Graphit, p-Aramid, m-Aramid, Polyethylen, Siliciumdioxid, Kenaf, Hanf oder Cellulose oder Mischungen davon.

6. Flächige Struktur nach einem der Ansprüche 1 bis 5, bei welcher der Gesamtgehalt des Harzes der Struktur 30% bis 100 Gew.% beträgt und 100% dann auftreten, wenn in der Schichtstruktur kein faseriges Material verwendet wird.

7. Flächige Struktur nach einem der Ansprüche 1 bis 4, bei welcher das härtbare Harzmaterial 1 % bis 80 Gew.% des Gesamtgehaltes des Harzes ausmacht und das erste härtbare Harzmaterial 20% bis 99 Gew.% des Gesamtgehaltes des Harzes in der flächigen Struktur ausmacht.

8. Prepreg, aufweisend eine Lage aus faserigem Material mit einem Flächengewicht von mindestens 150 g/m², die mit einem warmhärtenden ersten härtbaren Harzmaterial imprägniert ist und eine Viskosität von weniger als 20 Pa·s bei der Härtungstemperatur hat und ein Härtungsmittel enthält, das bei 50° bis 230°C härtet und eine Latenzzeit bei 23°C von mindestens 5 Tagen hat, sowie auf mindestens der einen Seite der imprägnierten Faserstofflage, eine Oberflächenschicht aus einem zweiten härtbaren Harzmaterial, das eine geringere Trockenklebrigkeit hat als das erste härtbare Harzmaterial, wobei die Trockenklebrigkeit bei 23°C für mindestens 5 Tage stabil bleibt und das zweite härtbare Harzmaterial mit dem ersten härtbaren Harzmaterial beim Erhitzen mischbar wird.

9. Prepreg nach Anspruch 8, bei welchem die Stabilität der Trockenklebrigkeit bei 23°C mindestens 21 Tage besteht.

10. Flächige Struktur nach Anspruch 1 oder Prepreg nach Anspruch 7, bei welchem das erste härtbare Harzmaterial einen Diglycidylether von Bisphenol A und Bisphenol F aufweist, das Tetraglycidyl-Derivat von 4,4'-Diaminodiphenylmethan (TGDDM), das Triglycidyl-Derivat von p-Aminophenol, Diepoxy(cyclohexylmethylcyclohexancarboxylat) oder eine Mischung davon.

11. Flächige Struktur nach Anspruch 1 oder 9 oder Prepreg nach Anspruch 7 oder 9, bei welchen das zweite härtbare Harzmaterial ausgewählt ist aus festen Bisphenol A-Harzen mit Mw größer als 1.000, jedoch kleiner als 15.000, bromierten und chlorierten Bisphenol A-Epoxyharzen, bromierten und chlorierten Harzen vom Tetraglycidyl-diaminodiphenylmethan-Typ, Epoxy-Phenolnovolak, Epoxy-Kresolnovolak, Epoxy-Derivaten von Bisphenol A-Novolak, Glycidylethern von Phenol-Derivaten von Dicyclopentadien, Triglycidylisocyanuratcyanatestern, Bismaleinimid und Phenolharzen einschließlich Kombinationen der vorgenannten.

12. Verfahren zum Herstellen eines Prepregs, worin eine Lage des faserigen Materials imprägniert ist mit einem ersten härtbaren Harzmaterial, das ein Härtungsmittel enthält und eine Viskosität von 20 Pa·s bis 50 Pa·s bei der Imprägnierungstemperatur hat, und während oder nach der Imprägnierung ein Film aus einem zweiten härtbaren Harzmaterial aufgebracht wird, wobei das zweite härtbare Harzmaterial eine kleinere Trockenklebrigkeit hat als die des ersten härtbaren Harzmaterials und eine Stabilität der Trockenklebrigkeit von mindestens 5 Tagen bei 23°C und das beim Erhitzen in seiner Viskosität herabgesetzt werden kann, um sich mit dem ersten härtbaren Harzmaterial zu verbinden.

## Revendications

1. Structure en feuille comprenant une feuille de coeur d'un premier matériau résineux durcissable et une couche extérieure d'un second matériau résineux durcissable, ladite couche extérieure étant capable de se mélanger avec la résine de la feuille de coeur lors de l'élévation de la température, la majeure partie de l'agent de durcissage pour les matériaux résineux étant contenue dans le premier matériau résineux et ledit agent de durcissage durcissant entre 50 et 230°C, **caractérisée en ce que** ladite couche extérieure a une stabilité du pouvoir adhésif d'au moins 5 jours à 23°C et a un pouvoir adhésif inférieur à celui dudit premier matériau résineux durcissable, et **en ce que** ledit agent de durcissage a une latence d'au moins 5 jours à 23°C.

2. Structure en feuille selon la revendication 1, dans laquelle le second matériau résineux durcissable a un pouvoir adhésif plus stable que le premier matériau résineux durcissable.

3. Structure en feuille selon la revendication 1 ou la revendication 2, dans laquelle la feuille de coeur comprend un matériau fibreux imprégné avec ledit premier matériau résineux durcissable.

4. Structure en feuille selon la revendication 3, dans laquelle le matériau fibreux a un grammage d'au moins 150 g/m².

5. Structure en feuille selon la revendication 3, dans laquelle le matériau fibreux est le verre, le graphite, le p-aramide, le m-aramide, le polyéthylène, la silice, le kenaf, le chanvre ou la cellulose ou un mélange de ceux-ci.

6. Structure en feuille selon l'une quelconque des revendications 1 à 5, dans laquelle le teneur de résine totale de la structure est de 30 à 100 % en poids, 100 % correspondant au cas où aucun matériau fibreux n'est utilisé dans la structure en feuille.

7. Structure en feuille selon l'une quelconque des revendications 1 à 4, dans laquelle le second matériau résineux durcissable représente de 1 à 80 % de la teneur de résine totale et le premier matériau résineux durcissable représente de 20 à 99 % en poids de la teneur de résine totale dans la structure en feuille.

8. Pré-imprégné comprenant une couche de matériau fibreux d'un grammage d'au moins 150 g/m² imprégné avec un premier matériau résineux thermodurcissable ayant un viscosité inférieure à 20 Pa à la température de durcissage et contenant un agent de durcissage durcissant entre 50 et 230°C et ayant une latence à 23°C d'au moins 5 jours et, sur au moins une surface de ladite couche fibreuse imprégnée, une couche superficielle d'un second matériau résineux durcissable qui a un pouvoir adhésif inférieur au premier matériau résineux durcissable, ledit pouvoir adhésif restant stable à 23°C pendant au moins 5 jours et ledit second matériau résineux durcissable devenant miscible au premier matériau résineux durcissable après chauffage.

9. Pré-imprégné selon la revendication 8, dans lequel ladite stabilité du pouvoir adhésif est d'au moins 21 jours à 23°C.

10. Structure en feuille selon la revendication 1 ou pré-imprégné selon la revendication 7, dans lequel ledit premier matériau résineux durcissable comprend un éther diglycidylique de Bisphénol A et de Bisphénol F, le dérivé tétraglycidyle du 4,4'-diaminodiphénylméthane (TGDDM), le dérivé triglycidyle du p-aminophénol, le di-époxy cyclohexanecarboxylate de cyclohexylméthyle ou un mélange de ceux-ci.

11. Structure en feuille selon la revendication 1 ou la revendication 9 ou pré-imprégné selon la revendication 7 ou la revendication 9, dans lequel le second matériau résineux durcissable est choisi parmi les résines de type Bisphénol A solides ayant une masse moléculaire supérieure à 1000 mais inférieure à 15000, les résines époxy de type Bisphénol A bromées et chlorées, les résines de type tétraglycidyldiaminodiphénylméthane bromées et chlorées, les novolaques époxy phénoliques, les novolaques époxy crésoliques, les dérivés époxy des novolaques de type bisphénol A, les éthers glycidyliques des dérivés phénoliques du dicyclo-pentadiène, les esters isocyanurate-cyanate de triglycidyle, le bismaléimide, et les phénoliques, comprenant leurs combinaisons.

12. Méthode de fabrication d'un pré-imprégné dans laquelle une couche de matériau fibreux est imprégnée avec un premier matériau résineux durcissable contenant un agent de durcissage et ayant une viscosité de 20 Pa à 50 Pa à la température d'imprégnation et, pendant ou après l'imprégnation, un film d'un second matériau résineux durcissable est appliqué, ledit second matériau résineux durcissable ayant un pouvoir adhésif inférieur à celui du premier matériau résineux durcissable et une stabilité du pouvoir adhésif d'au moins 5 jours à 23°C et est, après chauffage, réductible en viscosité pour se combiner avec le premier matériau résineux durcissable.
